# EUROPÄISCHE PATENTANMELDUNG

(11) **EP 4 512 574 A1**
(43) Veröffentlichungstag der Anmeldung: **26.02.2025**
(21) Anmeldenummer: 24195851.1
(22) Anmeldetag: 22.08.2024
(51) Int. Cl.: B23Q 3/06, B23Q 3/10, B25B 5/00

(54) **SPANNVORRICHTUNG UND SPANNSYSTEM**

(30) Priorität: 22.08.2023 DE 102023122416
(71) Anmelder: Hochschule Anhalt, Körperschaft des öffentlichen Rechts, 06366 Köthen (DE)
(72) Erfinder: Landenberger, Daniel, 06366 Köthen (Anhalt) (DE); Viertel, Marcus, 06844 Dessau-Roßlau (DE); Herbst, Thorsten, 06366 Köthen (Anhalt) (DE)
(74) Vertreter: Gramm, Lins & Partner Patent- und Rechtsanwälte PartGmbB

(57) **Zusammenfassung**

Die Erfindung betrifft eine Spannvorrichtung (2) zur Einbringung in eine Nut (4) eines Werkzeugmaschinentisches (3) mit einem Getriebe (7), wobei die Spannvorrichtung (2) eine Antriebsseite (2a) und eine Abtriebsseite (2b) hat, wobei an der Antriebsseite (2a) eine Bewegungsgröße einbringbar ist, wobei die Bewegungsgröße in eine rotatorische Bewegung der Abtriebsseite (2b) wandelbar ist, wobei an der Abtriebsseite (2b) ein Bolzen (5) mit Außengewinde angeordnet ist.

## Beschreibung

Die Erfindung betrifft eine Spannvorrichtung zur Einbringung in eine Nut eines Werkzeugmaschinentisches mit einem Getriebe, wobei die Spannvorrichtung eine Antriebsseite und eine Abtriebsseite hat, wobei an der Antriebsseite eine Bewegungsgröße einbringbar ist, wobei die Bewegungsgröße in eine rotatorische Bewegung der Abtriebsseite wandelbar ist.

CN217193944U offenbart eine Vorrichtung zum Fräsen speziell geformter Werkstücke. Die Vorrichtung wird dabei auf einer Fläche eines Werkzeugmaschinentisches befestigt, um das spezielle Werkstück zu bearbeiten. Dabei ist ein Bolzen fest fixiert, um das Werkstück aufzuschrauben.

CN214722290U offenbart eine Vorrichtung, die auf einem Werkzeugtisch montiert werden kann, um eine entsprechende Werkstückprobe zu bearbeiten. Dabei ist ein Bolzen fest fixiert, um die Werkstückprobe auf die Vorrichtung zu schrauben.

Derartige Vorrichtungen können den Nachteil haben, dass diese auf dem Werkzeugtisch montiert werden, sodass zwischen dem zu bearbeitenden Werkstück und dem Werkzeugtisch Raum für die Vorrichtung aufgewendet werden muss, was den zu bearbeitenden Platz für die Werkstückprobe verkleinert. Zudem ist der Bolzen fest fixiert, wobei eine Verschraubung nur erreicht werden kann, indem das zu bearbeitende Werkstück aktiv auf den Bolzen gedreht wird.

Ausgehend hiervon ist es Aufgabe der vorliegenden Erfindung eine verbesserte Spannvorrichtung zu schaffen.

Die Aufgabe wird mit einer Spannvorrichtung mit den Merkmalen des Anspruchs 1 gelöst. Vorteilhafte Ausführungsformen sind in den Unteransprüchen beschrieben. Bei der gattungsgemäßen Spannvorrichtung wird vorgeschlagen, dass an der Abtriebsseite ein Bolzen mit Außengewinde angeordnet ist.

Die Bewegungsgröße kann insbesondere eine Kraft oder ein Drehmoment sein. Dabei ist es vorteilhaft, wenn die einbringbare Bewegungsgröße ein Drehmoment ist, wobei eine rotatorische Bewegung an der Antriebsseite in die rotatorische Bewegung der Abtriebsseite wandelbar ist. Auf diese Weise erfährt der Bolzen auch eine rotatorische Bewegung und kann so mit einem zu bearbeitenden Werkstück verschraubt werden. Der Bolzen ist somit um seine Längsachse axial beweglich ausgebildet, was eine Verschraubung des Bolzens in das zu bearbeitende Werkstück ermöglicht.

Die erfindungsgemäße Spannvorrichtung hat den Vorteil, dass diese in einen Werkzeugmaschinentisch eingebracht werden kann, ohne Raum auf einer Anlagefläche zur Anlage eines zu bearbeitenden Werkstückes zu beanspruchen, wobei die Anlagefläche diejenige Fläche ist, an der das zu bearbeitende Werkstück angeordnet wird oder anliegen kann. Das Werkstück kann somit direkt auf die Anlagefläche geschraubt werden, indem der Bolzen in das zu bearbeitende Werkstück geschraubt wird, sodass kein Raum zwischen Werkstück und Anlagefläche durch die Spannvorrichtung blockiert wird. In einer Fertigung ist derartiger Bauraum oft begrenzt. Durch die erfindungsgemäße Spannvorrichtung kann somit mehr Raum für das zu bearbeitende Werkstück bereitgestellt werden, sodass zum Beispiel größere Werkstücke bei gleicher Dimensionierung des Werkzeugmaschinentisches verwendet werden können.

Die Verschraubung mit einem zu bearbeitenden Werkstück kann somit auch durch die Spannvorrichtung selbst erfolgen, indem die Bewegungsgröße der Antriebsseite in eine rotatorische Bewegungsgröße der Abtriebsseite gewandelt wird. Dabei ist denkbar, dass die Bewegungsgröße von einer Unterseite in die Antriebsseite einbringbar ist. Die Unterseite ist insbesondere diejenige Seite der Spannvorrichtung, an der sich der Bolzen mit Außengewinde nicht aus der Spannvorrichtung erstreckt.

Weiterhin ist es möglich beliebige Werkstückformen mit der Spannvorrichtung zu verschrauben.

Die Spannvorrichtung kann ein Getriebe haben, wobei die Antriebsseite und die Abtriebsseite an dem Getriebe angeordnet sind. Ferner vorteilhaft kann das Getriebe ein Umschlingungsgetriebe sein.

Auf diese Weise kann zum Beispiel eine seitlich versetzte Antriebsseite erreicht werden, wodurch die Bewegungsgröße in die rotatorische Bewegung der Abtriebsseite gewandelt werden kann. Auf diese Weise kann sich zum Beispiel die Antriebsseite außerhalb des Werkzeugmaschinentisches befinden, wobei die Abtriebsseite in die Nut des Werkzeugmaschinentisches eingebracht ist. Dabei kann die Bewegungsgröße an der Antriebsseite eingebracht werden, ohne durch den Werkzeugmaschinentisch behindert zu werden. Zumindest aber kann die Antriebsseite leichter erreicht werden, indem diese nicht durch das zu bearbeitende Werkstück blockiert wird.

An der Antriebsseite und an der Abtriebsseite kann jeweils ein Zahnrad mit Ritzeln angeordnet sein, wobei die eingebrachte Kraft oder das eingebrachte Drehmoment durch eine geschlossene Kette in eine longitudinale Bewegung der geschlossenen Kette wandelbar ist und anschließend in eine rotatorische Bewegung der Abtriebsseite wandelbar ist.

Die Lagerung der Antriebsseite und der Abtriebsseite kann insbesondere in einem Gehäuse der Spannvorrichtung integriert sein. Dabei kann das Gehäuse zum Beispiel einen Deckelabschnitt und einen Bodenabschnitt haben, wobei der Deckelabschnitt und der Bodenabschnitt als Gleitlagersitz der Kettenspannung ausgebildet sind. Somit kann ein effizientes Getriebe für die Spannvorrichtung bereitgestellt werden.

Ferner vorteilhaft kann die Spannvorrichtung eine Kulisse zum Spannen der Kette haben.

Über die Kulisse kann die Kette auf einfache Weise an dem Getriebe gespannt oder gelöst werden. Somit wird eine einfache Montage der Spannvorrichtung ermöglicht.

Durch die Kulisse kann die Kette auf den Zahnrädern gespannt und gelöst werden. Die Kulisse kann zum Beispiel einen Rahmen haben, wobei an dem Rahmen ein oberes Verbindungsstück und/oder ein unteres Verbindungsstück mit dem Zahnrad der Antriebsseite und/oder mit dem Zahnrad der Abtriebsseite verbunden ist. Der Rahmen kann zum Beispiel mit Schrauben an einem Mittelblock der Spannvorrichtung fixiert oder gelöst werden, sodass der Rahmen auf oder an dem Mittelblock verschiebbar gelagert ist. Sofern die Schrauben den Rahmen nicht an dem Mittelblock fixiert halten, kann der Rahmen und damit auch das über das obere Verbindungsstück und/oder untere Verbindungsstück verbundene Zahnrad der Antriebsseite und/oder der Abtriebsseite in Längserstreckungsrichtung der Spannvorrichtung verschoben werden. Der Mittelblock und ein Unterteil der Spannvorrichtung können dabei insbesondere einteilig ausgebildet sein. Es ist aber auch denkbar, dass der Mittelblock und das Unterteil aus separaten Teilen besteht und nachträglich miteinander verbunden werden.

Somit kann der Abstand zwischen den Zahnrädern der Antriebsseite und der Abtriebsseite verkürzt bzw. verlängert werden. Bei einem kleineren Abstand zwischen den Zahnrädern kann die Kette auf einfache Weise eingesetzt werden. Wird der Abstand der Zahnräder anschließend über die Kulisse wieder vergrößert, ist die Kette im gespannten Zustand an den Zahnrädern gelagert. Durch die verschiebbare Kulisse kann die Kette auch wieder von den Zahnrädern der Antriebsseite und der Abtriebsseite gelöst werden.

Weiterhin kann eine zum Beispiel beanspruchungsbedingte Längung der Kette ausgeglichen werden, wodurch die Funktionalität auch bei einer gelängten Kette gewährleistet werden kann.

Die Antriebsseite und die Abtriebsseite können auf einer gemeinsamen Ebene liegen.

Auf diese Weise kann die Spannvorrichtung kompakter ausgebildet werden. Durch die Lage der An- und Abtriebsseite auf einer gemeinsamen Ebene kann die Spannvorrichtung sehr flach ausgebildet werden.

Es ist insbesondere vorteilhaft, wenn die Spannvorrichtung flach ausgebildet ist. Dies kann zum Beispiel dadurch erreicht werden, indem die die Höhe der Spannvorrichtung nicht größer ist als die doppelte Höhe einer verwendeten Kette ist. Die Höhe ist dabei die Richtung in der sich der Bolzen in seiner Längserstreckungsrichtung erstreckt. Bei der Höhe der Spannvorrichtung bleibt aber die Höhe des Bolzens mit Außengewinde unberücksichtigt.

Die Länge der Spannvorrichtung kann dabei variabel sein, indem die Länge zum Beispiel an den verwendeten Werkzeugmaschinentisch angepasst wird. Die Länge ist dabei die Richtung, in der die Spannvorrichtung in die Nut des Werkzeugmaschinentisches eingeführt werden kann.

Der Bolzen kann mit einer Gleitlagerung in der Spannvorrichtung gelagert sein.

Durch die Wahl einer geeigneten Gleitlagerung kann die axiale Beweglichkeit des Bolzens gewährleistet werden.

Ferner betrifft die vorliegende Erfindung ein Spannsystem mit einem Werkzeugmaschinentisch mit einer Anlagefläche zur Anlage eines zu bearbeitenden Werkstückes und mit wenigstens einer Nut, wobei in der Nut wenigstens eine oben beschriebene Spannvorrichtung eingebracht ist, wobei der Bolzen mit Außengewinde aus der Anlagefläche des Werkzeugmaschinentisches herausragt, wobei ein zu bearbeitendes Werkstück auf das Außengewinde aufschraubbar ist.

Das Spannsystem hat den Vorteil, dass die Spannvorrichtung in den Werkzeugmaschinentisch eingebracht werden kann, ohne Raum auf der Anlagefläche zur Anlage des zu bearbeitenden Werkstückes zu beanspruchen. Das Werkstück kann somit direkt auf die Anlagefläche geschraubt werden, sodass kein Raum zwischen Werkstück und Anlagefläche durch die Spannvorrichtung blockiert wird.

Die Nut kann eine T-förmige Nut sein. Durch die T-förmige Nut wird eine einfache Positionierung der Spannvorrichtung in dem Werkzeugmaschinentisch erreicht, indem die Spannvorrichtung nur in eine Bewegungsrichtung in die T-förmige Nut eingeschoben werden kann.

Die Nut kann insbesondere derart ausgebildet sein, dass diese größer dimensioniert ist als die Spannvorrichtung, wobei die Spannvorrichtung in der Nut beweglich gelagert ist.

Die Spannvorrichtung kann insbesondere auf der von der Anlagefläche abgewandten Seite des Werkzeugmaschinentisches in der Nut angeordnet sein, wobei der Bolzen durch die Nut auf die der Anlagefläche zugewandten Seite des Werkzeugmaschinentisches ragt. Auf diese Weise ragt ausschließlich der Bolzen der Spannvorrichtung durch die Nut auf die der Anlagefläche zugewandte Seite des Werkzeugmaschinentisches. Der Bolzen kann in das zu bearbeitende Werkstück geschraubt werden, ohne dass zusätzlicher Bauraum zwischen Werkstück und Werkzeugmaschinentisch durch die Spannvorrichtung beansprucht wird. Der Bolzen kann somit durch die Spannvorrichtung in das zu bearbeitende Werkstück geschraubt werden.

Insbesondere bei der Verwendung von mehreren Spannvorrichtungen und einem zu bearbeitenden Werkstück kann das Werkstück nicht auf die Bolzen der Spannvorrichtungen geschraubt werden. Die Verschraubung erfolgt dann über die Spannvorrichtung selbst, indem eine Bewegungsgröße an der Antriebsseite eingebracht wird und diese in eine rotatorische Bewegung des Bolzens gewandelt wird.

Die Verschraubung mit einem zu bearbeitenden Werkstück kann somit auch durch die Spannvorrichtung selbst erfolgen, indem die Bewegungsgröße der Antriebsseite in eine rotatorische Bewegungsgröße der Abtriebsseite gewandelt wird. Dabei wird die Bewegungsgröße insbesondere auf der von der Anlagefläche abgewandten Seite des Werkzeugmaschinentisches in die Spannvorrichtung eingebracht. Die Bewegungsgröße kann zum Beispiel dadurch an der Antriebsseite eingebracht werden, indem mit einem geeigneten Werkzeug durch die Nut zum Beispiel ein Drehmoment eingebracht werden kann. Es ist auch denkbar, dass die Antriebsseite zum Beispiel seitlich aus dem Werkzeugmaschinentisch hervorragt, während die Abtriebsseite in der Nut des Werkzeugmaschinentisches angeordnet ist. Auf diese Weise kann auf einfache Weise eine entsprechende Bewegungsgröße auf der Antriebsseite der Spannvorrichtung eingebracht werden. Dabei ist die Antriebsseite unterhalb der Anlagefläche und auf der der Anlagefläche abgewandten Seite des Werkzeugmaschinentisches angeordnet,

Die Spannvorrichtung kann durch Verschraubung mit dem Werkstück an dem Werkzeugmaschinentisch fixiert sein. Ferner vorteilhaft kann die Spannvorrichtung in der Nut beweglich gelagert sein und erst durch Verschraubung mit dem Werkstück an dem Werkzeugmaschinentisch fixiert werden.

Die Spannvorrichtung wird somit allein durch die Verschraubung in der Nut fixiert. Dies hat den Vorteil, dass die Spannvorrichtung in der Nut vor der Montage mit dem Werkstück frei beweglich ist und an die gewünschte Position in der Nut geschoben werden kann. Anschließend kann die Spannvorrichtung dann durch Verschraubung mit dem Werkstück an dem Werkzeugmaschinentisch fixiert werden.

Der unbestimmte Begriff "ein" ist als solcher und nicht als Zahlwort zu verstehen. So ist auch denkbar, dass eine Vielzahl von Spannvorrichtungen, insbesondere zwei oder vier Spannvorrichtungen, in dem Spannsystem angeordnet sind. Auf diese Weise können größere Werkstücke mit mehreren Spannvorrichtungen verschraubt werden.

Die Erfindung wird nachfolgend anhand von Ausführungsbeispielen beispielhaft mit den beigefügten Zeichnungen näher erläutert. Es zeigen:
- Figur 1: - ein erfindungsgemäßes Spannsystem mit einer Spannvorrichtung in einer ersten Ausführungsform;
- Figur 2: - ein vergrößerter Ausschnitt des Spannsystems nach Figur 1 ;
- Figur 3: - eine erfindungsgemäße Spannvorrichtung in einer perspektivischen Ansicht für ein Spannsystem nach den Figuren 1 und 2;
- Figur 4: - die Spannvorrichtung nach Figur 3 in einer gedrehten perspektivischen Ansicht;
- Figur 5: - die Spannvorrichtung nach der Figur 3 ohne Darstellung der Kette;
- Figur 6: - eine Abtriebsseite mit Bolzen einer Spannvorrichtung nach den Figuren 3 bis 5 in einer schematischen Seitenansicht;
- Figur 7: - eine schematische Darstellung eines erfindungsgemäßen Spannsystems in einer Seitenansicht mit einem zu bearbeitenden Werkstück;
- Figur 8: - eine erfindungsgemäße Spannvorrichtung in einer perspektivischen Ansicht für ein Spannsystem nach der Figur 3;
- Figur 9: - die Spannvorrichtung nach Figur 8 in einer gedrehten perspektivischen Ansicht; und
- Figur 10: - die Spannvorrichtung nach der Figur 8 ohne Darstellung der Kette.

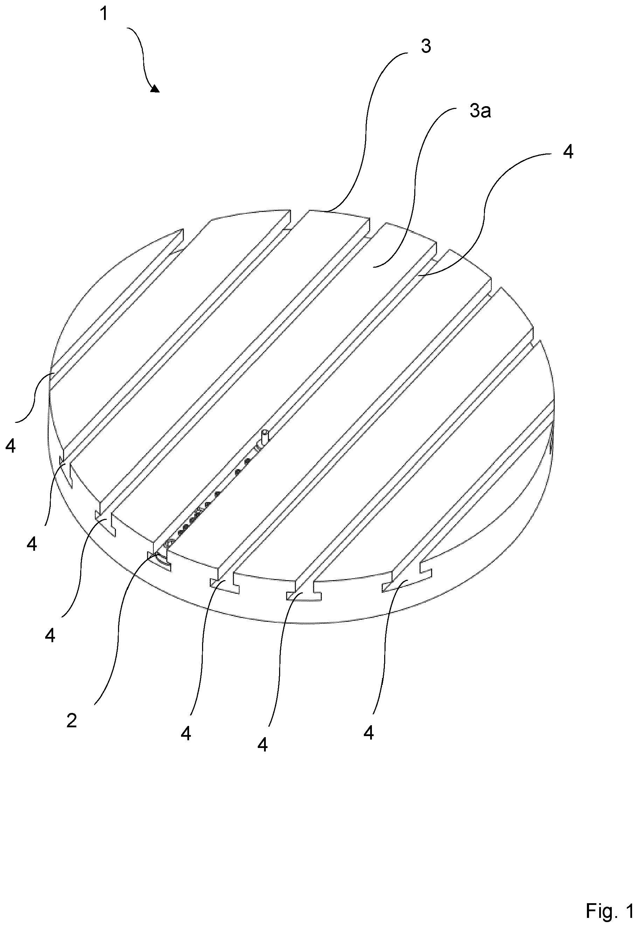

Figur 1 zeigt ein erfindungsgemäßes Spannsystem 1 mit einer Spannvorrichtung 2 in einer ersten Ausführungsform. Das Spannsystem 1 hat einen runden Werkzeugmaschinentisch 3 mit einer Vielzahl von T-förmigen Nuten 4. Insbesondere kann vorgesehen sein, dass der Werkzeugmaschinentisch 3 unterschiedliche Formen aufweist und nicht auf die runde Form limitiert ist. Beispielsweise kann der Werkzeugmaschinentisch 3 eine ovale, viereckige oder quadratische Form aufweisen. In diese T-förmigen Nuten 4 kann die Spannvorrichtung 2 eingeschoben werden. Die Erfindung ist auch nicht auf eine einzelne Spannvorrichtung 2 begrenzt. So ist denkbar, dass auch eine Vielzahl von Spannvorrichtungen 2, insbesondere zwei oder vier Spannvorrichtungen 2, in die T-förmigen Nuten 4 einbringbar sind.

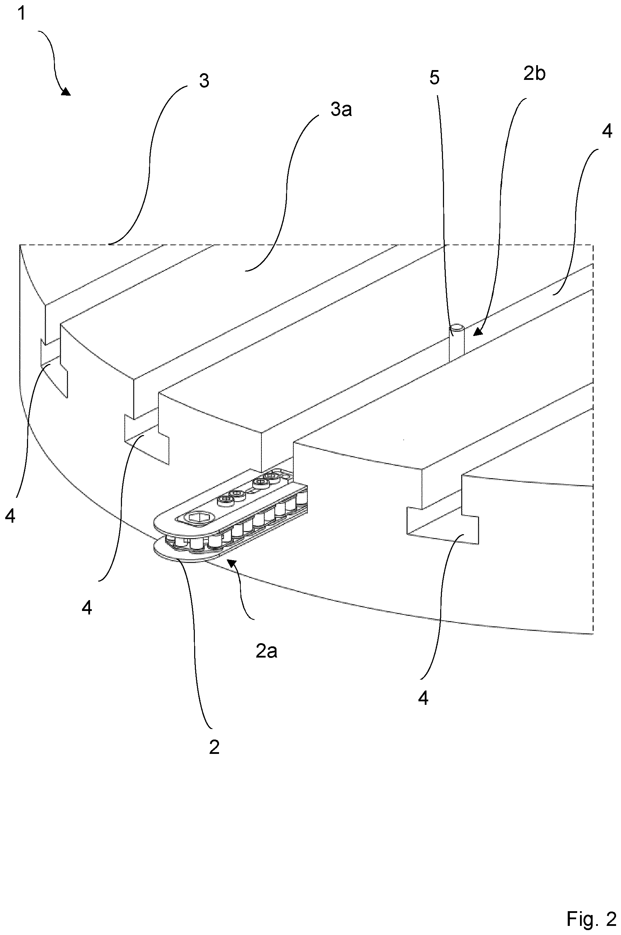

Figur 2 zeigt einen vergrößerten Ausschnitt des Spannsystems 1 nach Figur 1. Zu erkennen ist, dass die Spannvorrichtung 2 in eine der T-förmigen Nuten 4 eingebracht wird. Die Spannvorrichtung 2 hat eine Antriebsseite 2a und eine Abtriebsseite 2b, wobei an der Antriebsseite 2a eine Bewegungsgröße einbringbar ist, die in eine rotatorische Bewegung der Abtriebsseite 2b gewandelt wird. An der Abtriebsseite 2b ist ein Bolzen 5 mit einem Außengewinde angeordnet.

Aus den Figuren 1 und 2 wird deutlich, dass der runde Werkzeugmaschinentisch 3 eine Anlagefläche 3a zur Anlage eines zu bearbeitenden Werkstückes hat. Der Bolzen 5 erstreckt sich dabei durch die T-förmige Nut 4 auf die der Anlagefläche 3a zugewandten Seite des Werkzeugmaschinentisches 3. Somit ist die Spannvorrichtung 2 auf der der Anlagefläche 3a abgewandten Seite des Werkzeugmaschinentisches 3 angeordnet, wobei nur der Bolzen 5 durch die T-förmige Nut 4 sich auf die der Anlagefläche 3a zugewandten Seite des Werkzeugmaschinentisches 3 erstreckt. Dies hat den Vorteil, dass der Bolzen 5 mit Außengewinde in das zu bearbeitende Werkstück geschraubt werden kann.

Das zu bearbeitende Werkstück weist entsprechende Bohrungen mit Innengewinde auf, die zu dem Bolzen korrespondierend ausgebildet sind. Durch die derartige Ausbildung der Spannvorrichtung 2 kann das zu bearbeitende Werkstück direkt auf den Werkzeugmaschinentisch 3 geschraubt werden, sodass das zu bearbeitende Werkstück an der Anlagefläche 3a anliegt. Dadurch ergibt sich kein oder zumindest nur wenig Verlust von Raum, der für die Bearbeitung des Werkstückes vorgesehen ist. Da derartiger Raum in zum Beispiel einer Werkzeugmaschine begrenzt ist, kann dieser durch das erfindungsgemäße Spannsystem 1 und die erfindungsgemäße Spannvorrichtung 2 optimal ausgenutzt werden.

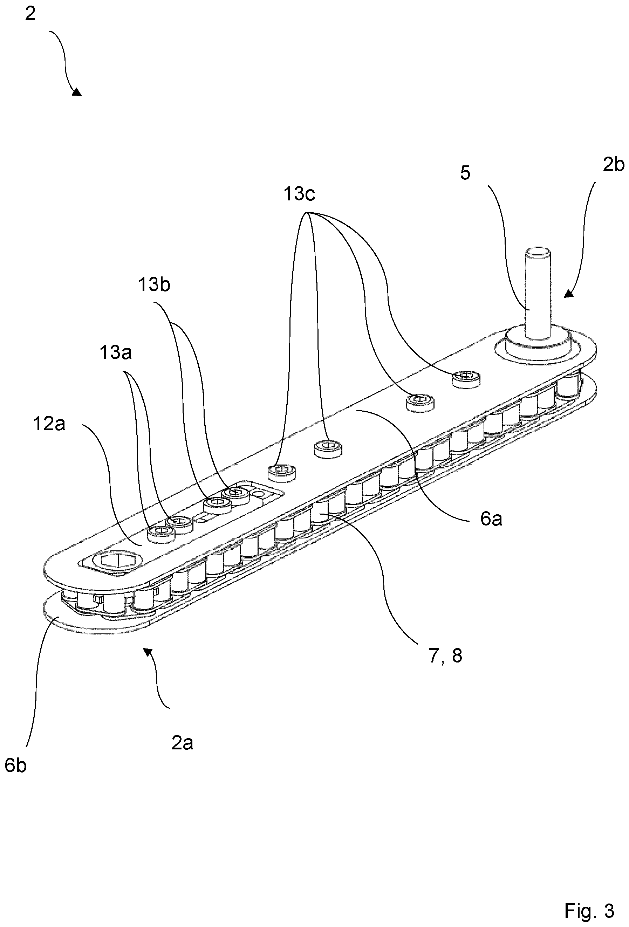

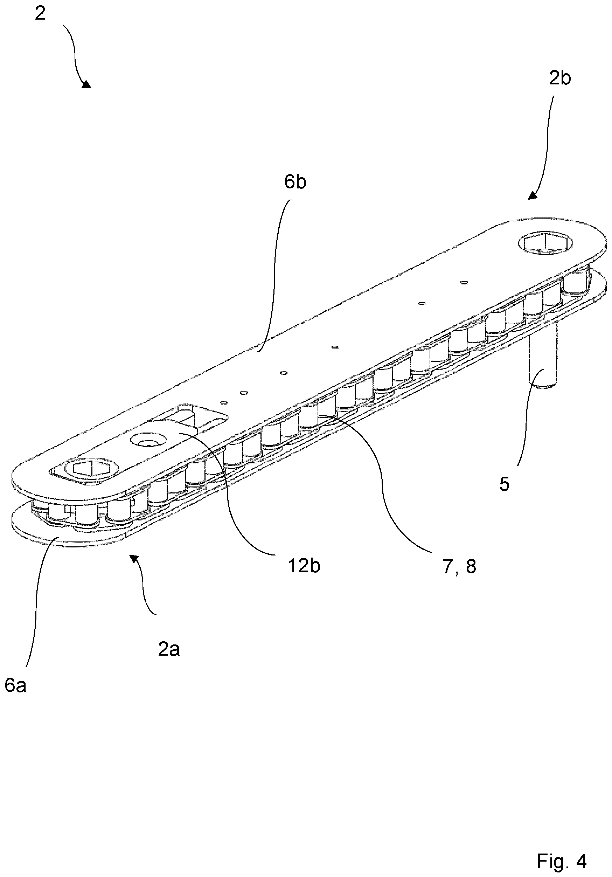

Figur 3 zeigt eine erfindungsgemäße Spannvorrichtung 2 in einer perspektivischen Ansicht, die in einem Spannsystem nach den Figuren 1 und 2 verwendbar ist. Figur 4 zeigt die Spannvorrichtung 2 nach Figur 3 in einer gedrehten perspektivischen Ansicht.

Aus den Figuren 3 und 4 wird deutlich, dass die Spannvorrichtung 2 ein Deckelteil 6a und ein Unterteil 6b hat. Die Antriebsseite 2a und die Abtriebsseite 2b sind über ein Getriebe 7 miteinander gekoppelt. Dabei ist das Getriebe 7 als Umschlingungsgetriebe 7 ausgebildet. Bei dem Umschlingungsgetriebe 7 wird zur Bewegungs- bzw. Kraftübertragung zwischen voneinander weit entfernten GetriebeGliedern ein Zugmittel, nämlich eine Kette 8, verwendet, die diese Getriebe-Glieder umschlingt.

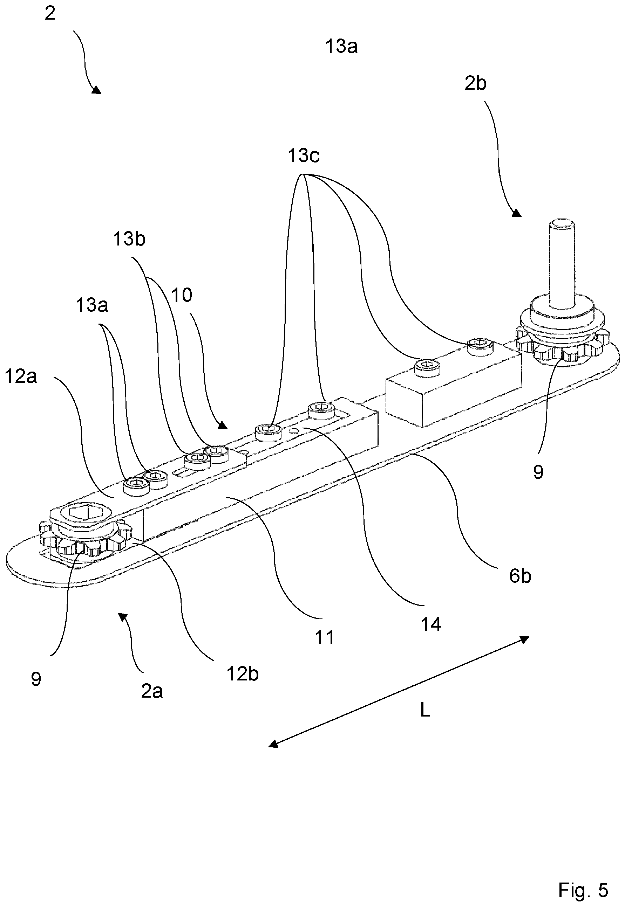

Figur 5 zeigt eine Spannvorrichtung 2 nach den Figuren 3 und 4, wobei in der Figur 5 zur verbesserten Übersichtlichkeit die Kette 8 und das Deckelteil 6a nicht dargestellt sind. Zu erkennen ist, dass an der Antriebsseite 2a und an der Abtriebsseite 2b jeweils ein Zahnrad 9 mit Ritzeln angeordnet ist, wobei die Kette 8 die eingebrachte Kraft oder das eingebrachte Drehmoment in eine longitudinale Bewegung der Kette 8 und anschließend in eine rotatorische Bewegung der Abtriebsseite 2b wandelt.

Aus der Figur 5 wird deutlich, dass die Spannvorrichtung eine Kulisse 10 hat. Durch die Kulisse 10 kann die Kette 8 auf den Zahnrädern 9 der Antriebsseite 2a und der Abtriebsseite 2b gespannt und gelöst werden. Die Kulisse 10 hat einen Rahmen 11, wobei an dem Rahmen 11 ein oberes Verbindungsstück 12a und ein unteres Verbindungsstück 12b angeordnet ist und wobei das obere Verbindungsstück 12a und das untere Verbindungsstück 12b mit dem Zahnrad 9 der Antriebsseite 2a verbunden ist. Das obere Verbindungsstück 12a und das untere Verbindungsstück 12b sind dabei über Schrauben 13a mit dem Rahmen 11 verbunden.

Der Rahmen 11 kann mit Schrauben 13b an einem Mittelblock 14 der Spannvorrichtung 2 fixiert oder gelöst werden, sodass der Rahmen 11 auf oder an dem Mittelblock 14 verschiebbar gelagert ist. Sofern die Schrauben 13b den Rahmen 11 nicht an dem Mittelblock 14 fixiert halten, kann der Rahmen 11 und damit auch das über das obere Verbindungsstück 12a und untere Verbindungsstück 12b verbundene Zahnrad 9 der Antriebsseite 2a in Längserstreckungsrichtung L der Spannvorrichtung 2 verschoben werden. Somit kann der Abstand zwischen den Zahnrädern 9 der Antriebsseite 2a und der Abtriebsseite 2b verkürzt bzw. verlängert werden. Bei einem kleineren Abstand zwischen den Zahnrädern 9 der Antriebsseite 2a und der Abtriebsseite 2b kann die Kette 8 auf einfache Weise eingesetzt werden. Wird der Abstand der Zahnräder 9 anschließend über die Kulisse 10 wieder vergrößert, ist die Kette 8 im gespannten Zustand an den Zahnrädern 9 der Antriebsseite 2a und der Abtriebsseite 2b gelagert. Durch die verschiebbare Kulisse 10 kann die Kette 8 auch wieder von den Zahnrädern 9 der Antriebsseite 2a und der Abtriebsseite 2b gelöst werden.

Es ist aber auch denkbar, dass die Verbindungsmöglichkeiten durch die Schrauben 13a, 13b auch mit anderen Verbindungstechniken gelöst werden kann.

Insbesondere aus der Zusammenschau der Figuren 3 bis 5 wird deutlich, dass durch einfache Weise ein eingebrachtes Drehmoment als Bewegungsgröße auf der Antriebsseite 2a in eine rotatorische Bewegung der Abtriebsseite 2b gewandelt werden kann. Durch die daraus resultierende Rotation des Bolzens 5 kann der Bolzen mit einem entsprechenden zu bearbeitenden Werkstück verschraubt werden, wobei das zu bearbeitende Werkstück die korrespondierenden Bohrungen mit einem Innengewinde hat. Auf diese Weise werden das Werkstück und die Spannvorrichtung 2 gegenseitig an dem Werkzeugmaschinentisch 3 fixiert, wobei das zu bearbeitende Werkstück an der Anlagefläche 3a aufliegt und die Spannvorrichtung 2 in der Nut fixiert gehalten wird.

Die Antriebsseite 2a und die Abtriebsseite 2b liegen auf einer gemeinsamen Ebene, wobei die Ebene in der Längserstreckungsrichtung L der Spannvorrichtung 2 aufgespannt wird. Auf diese Weise ist die Spannvorrichtung 2 kompakter ausgebildet. Durch die Lage der Antriebsseite 2a und der Abtriebsseite 2b auf einer gemeinsamen Ebene ist die Spannvorrichtung 2 sehr flach ausgebildet.

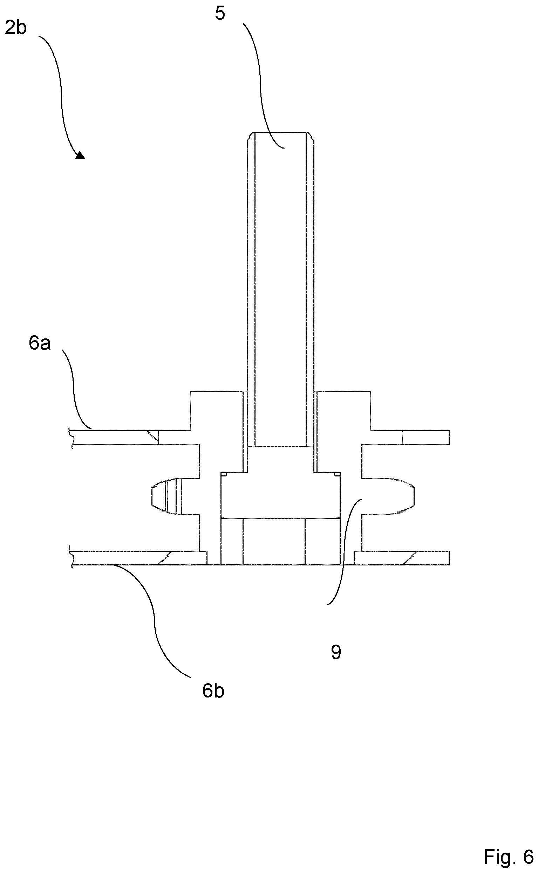

Weiterhin wird deutlich, dass das Deckelteil 6a über Schrauben 13c mit der Spannvorrichtung 2 verschraubt ist. Das Deckelteil 6a ist dabei zum Beispiel mit dem Mittelblock 14 verschraubt. Der Mittelblock 14 und das Unterteil 6b können dabei insbesondere einteilig ausgebildet sein. Es ist aber auch denkbar, dass der Mittelblock 14 und das Unterteil 6b aus separaten Teilen besteht und nachträglich miteinander verbunden werden. Es ist aber auch denkbar, dass die Verbindungsmöglichkeit durch die Schrauben 13c auch mit anderen Verbindungstechniken gelöst werden kann. Figur 6 zeigt die Abtriebsseite 2b mit Bolzen 5 einer Spannvorrichtung 2 nach den Figuren 3 bis 5 in einer schematischen Seitenansicht. Deutlich wird, dass das Zahnrad 9 der Abtriebsseite 2b mit einer Gleitlagerung in der Spannvorrichtung 2 gelagert ist. Durch die Gleitlagerung kann der durch die Gleitreibung verursachte Widerstand klein gehalten werden, wodurch eine gute Rotation des Bolzens 5 gewährleistet werden kann. Dabei ist denkbar, dass das Gleitlager zum Beispiel als Gleitlager mit Festkörperreibung ausgebildet ist, wobei auch weitere Gleitlagerarten wie zum Beispiel mit Flüssigkeitsreibung denkbar sind.

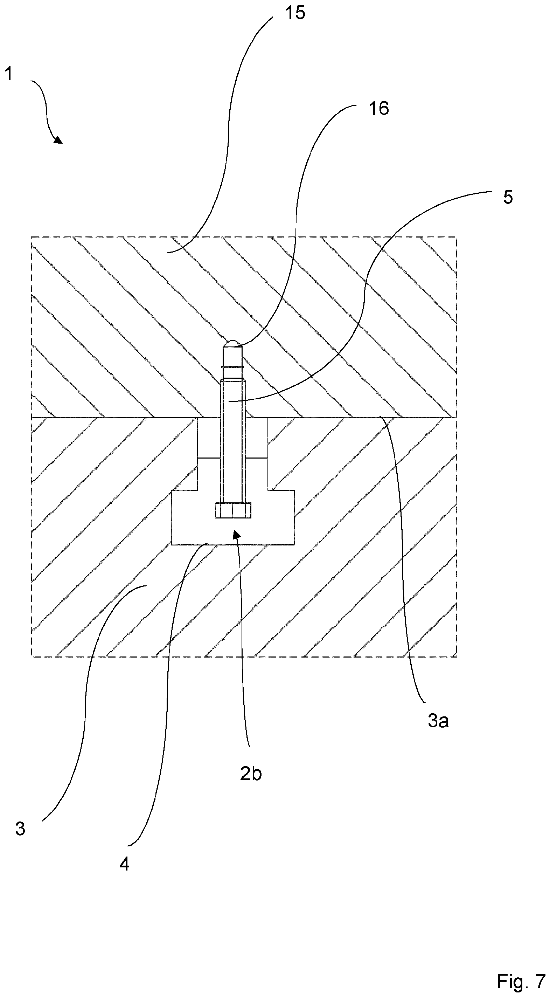

Figur 7 zeigt eine schematische Darstellung eines erfindungsgemäßen Spannsystems 1 in einer Seitenansicht mit einem zu bearbeitenden Werkstück 15. Deutlich wird, dass in dem zu bearbeitenden Werkstück 15 eine Bohrung 16 angeordnet ist, wobei die Bohrung 16 mit einem Innengewinde korrespondierend zu dem Bolzen 5 mit Außengewinde der Spannvorrichtung 2 ausgebildet ist. Durch Einbringen einer Bewegungsgröße auf der Antriebsseite 2a der Spannvorrichtung 2 wird die Bewegungsgröße in eine rotatorische Bewegung des Bolzens 5 gewandelt, wobei der Bolzen 5 mit dem zu bearbeitenden Werkstück 15 verschraubt werden kann. Auf diese Weise kann das zu bearbeitende Werkstück 15 direkt an der Anlagefläche 3a des Werkzeugmaschinentisches 3 anliegen.

Somit wird kein zusätzlicher Bauraum zwischen dem zu bearbeitenden Werkstück 15 und dem Werkzeugmaschinentisch 3 durch die Spannvorrichtung 2 beansprucht.

Die Spannvorrichtung 2 wird durch Verschraubung mit dem zu bearbeitenden Werkstück 15 an dem Werkzeugmaschinentisch 3 fixiert gehalten. Die Spannvorrichtung 2 wird somit allein durch die Verschraubung in der Nut 4 fixiert. Dies hat den Vorteil, dass die Spannvorrichtung 2 in der Nut 4 vor der Montage mit dem zu bearbeitenden Werkstück 15 frei beweglich ist und an die gewünschte Position in der Nut 4 geschoben werden kann. Anschließend kann die Spannvorrichtung 2 dann durch Verschraubung mit dem zu bearbeitenden Werkstück 15 an dem Werkzeugmaschinentisch 3 fixiert werden.

Alternativ kann die Spannvorrichtung 2 in das Werkstück 15 eingeschraubt aber noch nicht fixiert (d. h. nicht festgezogen) werden. Dadurch ist das Werkstück 15 mit der Spannvorrichtung 2 noch beweglich und kann an die gewünschte (End-) Position in der Nut 4 verschoben und dort fixiert (festgezogen) werden.

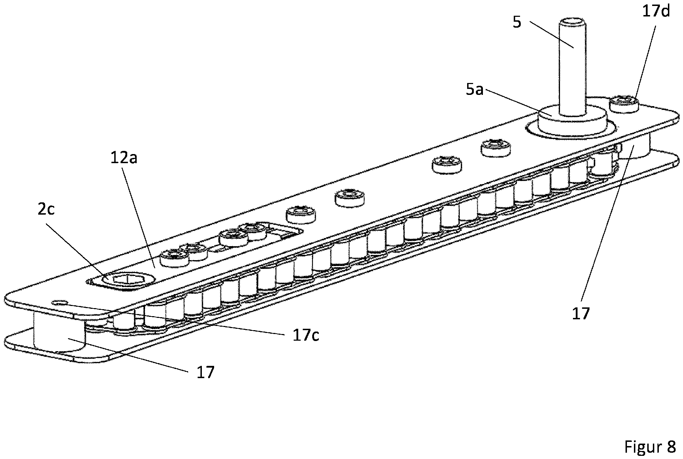

Figur 8 zeigt eine erfindungsgemäße Spannvorrichtung 2 in einer perspektivischen Ansicht für ein Spannsystem 1 nach der Figur 3. Dabei zeigt Figur 8 ferner ein Widerlager mit integrierter Gleitlagerung 5a. Insbesondere kann der Bolzen 5 ein Außengewinde aufweisen, sodass das Widerlager 5a als Schraubenkopfwiderlager ausgebildet ist.

Darüber hinaus zeigt Fig. 8 auf der Antriebsseite 2a einen Antrieb 2c, ein Aufnahme zur Kraftübertragung, der insbesondere ein Innensechskant aufweist. Vorzugsweise kann die Kraft mittels des Sechskants auf den Antrieb 2c und somit auf die Kette 8 übertragen werden.

Darüber hinaus kann zusätzlich vorgesehen sein, dass die Spannvorrichtung 2 zumindest einen einzigen, vorzugweise jedoch mindestens zwei, Abstandshalter 17 aufweist. Die Abstandshalter 17 können entlang der Längsrichtung L angeordnet sein . Insbesondere kann vorgesehen sein, dass die Abstandshalter 17 außerhalb eines Bereichs angeordnet sein können, welcher von der Kette 8 umschlungen ist. Mit anderen Worten kann vorgesehen sein, dass die Abstandshalter 17 nicht zwischen den Zahnrädern 9 angeordnet sind. Vorzugsweise weisen die Abstandshalter 17 in Längsrichtung L einen maximalen Abstand zueinander auf. Dies hat der Vorteil, dass das Spannsystem 1, insbesondere das Deckteil 6a und das Unterteil 6b Verwindungssteif miteinander verbunden sind, sodass beim Übertragen einer Kraft auf die Antriebsseite 2a eine möglichst geringe Verwindung auftritt und so ein Verkanten drehbaren Elemente reduziert wird.

Zur Befestigung des Abstandshalter 17 zwischen dem Deckteil 6a und dem Unterteil 6b, weist zumindest das Deckteil eine Aussparung im Deckteil 17c auf, sodass eine Verbindungselement 17d durch die Aussparung im Deckteil 17c in eine Abstandshalterbohrung 17a (hier nicht gezeigt) eingeführt oder hindurchgeführt werden kann.

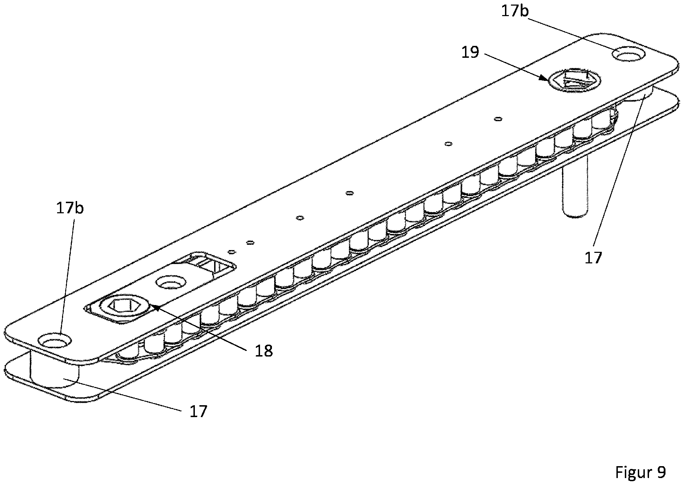

Figur 9 zeigt die Spannvorrichtung 2 nach Figur 8 in einer gedrehten perspektivischen Ansicht. Dabei zeigt Figur 9 insbesondere eine Aussparung im Unterteil 17b durch die das Verbindungselement 17d ebenfalls hindurchgeführt werden kann. Mit anderen Worten kann vorgesehen sein, dass das Verbindungselement durch die Aussparung im Deckteil 17a, die Abstandshalterbohrung 17c und der Aussparung im Unterteil 17b hindurchgeführt werden kann. Weiter kann vorgesehen sein, dass die Aussparung im Unterteil 17b einen Durchmesser aufweist, welcher größer als ein Durchmesser der Aussparung im Deckteil 17a ist. Insbesondere kann auch vorgesehen sein, dass die Aussparungen 17a, 17b rund sind. Ferner kann die Aussparung im Unterteil 17b konisch ausgebildet sein. Eine konische Ausbildung der Aussparung im Unterteil 17b ermöglicht ein Einführen eines entsprechenden Verbindungselements 17d, wie beispielsweise einer Schraube, insbesondere einer Senkkopfschraube oder eines Stifts, sodass ein Kopf des Verbindungselements 17d in die konische Aussparung 17b aufgenommen werden kann. Dies hat den Vorteil, dass das Verbindungselement 17d plan mit der Unterseite 6b ist, sodass ein Bewegen des Spannsystems 1 in der Nut 4 des Werkzeugmaschinentisches 3 möglich ist. Beispielsweise kann vorgesehen sein, dass das Verbindungselement auf der Deckseite 6a befestigt wird. Beispielsweise kann vorgesehen sein, dass die Deckseite 6a in der Aussparung 17c ein Gewinde aufweist.

Darüber hinaus kann vorgesehen sein, dass die Antriebsseite 2a einen Lagersitz für den Antrieb 18 für den Antrieb 2c aufweist. Vorgesehen sein kann auch, dass die Abtriebsseite 2b ebenfalls einen Lagersitz 19 aufweist. Ein entsprechender Lagersitz ermöglicht eine entsprechende Aufnahme eines Lagers.

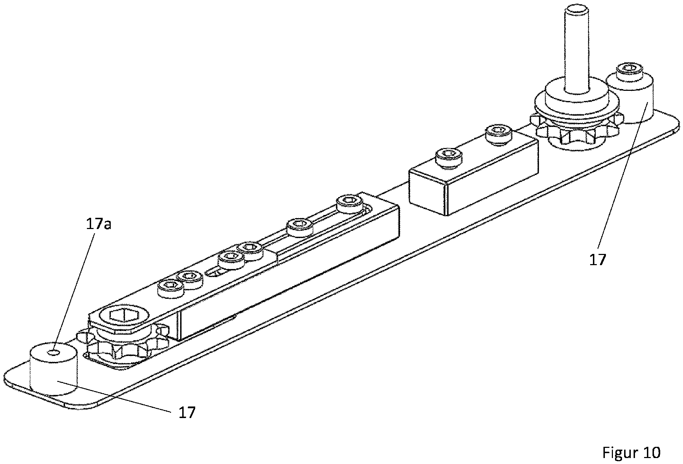

Die Figur 10 zeigt die Spannvorrichtung 2 nach der Figur 8 ohne Darstellung der Kette 8. Insbesondere zeigt Fig. 10 die Abstandshalter 17 mit der Abstandshalterbohrung 17a.

### Bezugszeichenliste

- 1: Spannsystem
- 2: Spannvorrichtung
- 2a: Antriebsseite
- 2b: Abtriebsseite
- 2c: Antrieb
- 3: Werkzeugmaschinentisch
- 3a: Anlagefläche
- 4: Nut
- 5: Bolzen
- 5a: Widerlager mit integrierter Gleitlagerung
- 6a: Deckelteil
- 6b: Unterteil
- 7: Getriebe
- 8: Kette
- 9: Zahnräder
- 10: Kulisse
- 11: Rahmen
- 12a: oberes Verbindungsstück
- 12b: unteres Verbindungsstück
- 13a: Schrauben
- 13b: Schrauben
- 13c: Schrauben
- 14: Mittelblock
- 15: Werkstück
- 16: Bohrung
- 17: Abstandshalter
- 17a: Abstandshalterbohrung
- 17b: Aussparung im Unterteil
- 17c: Aussparung im Deckteil
- 17d: Verbindungselement
- 18: Lagersitz des Antriebs
- 19: Lagersitz eines Abtriebs
- L: Längserstreckungsrichtung

## Patentansprüche

1. Spannvorrichtung (2) zur Einbringung in eine Nut (4) eines Werkzeugmaschinentisches (3) mit einem Getriebe (7), wobei die Spannvorrichtung (2) eine Antriebsseite (2a) und eine Abtriebsseite (2b) hat, wobei an der Antriebsseite (2a) eine Bewegungsgröße einbringbar ist, wobei die Bewegungsgröße in eine rotatorische Bewegung der Abtriebsseite (2b) wandelbar ist, **dadurch gekennzeichnet, dass** an der Abtriebsseite (2b) ein Bolzen (5) mit Außengewinde angeordnet ist.

2. Spannvorrichtung (2) nach Anspruch 1, **dadurch gekennzeichnet, dass** die Spannvorrichtung (2) ein Getriebe (7) hat, wobei die Antriebsseite (2a) und die Abtriebsseite (2b) an dem Getriebe (7) angeordnet sind.

3. Spannvorrichtung (2) nach Anspruch 2, **dadurch gekennzeichnet, dass** das Getriebe (7) ein Umschlingungsgetriebe ist.

4. Spannvorrichtung (2) nach Anspruch 3, **dadurch gekennzeichnet, dass** an der Antriebsseite (2a) und an der Abtriebsseite (2b) jeweils ein Zahnrad (9) mit Ritzeln angeordnet ist, wobei eine geschlossene Kette (8) die eingebrachte Kraft oder das eingebrachte Drehmoment in eine longitudinale Bewegung der geschlossenen Kette (8) wandelbar ist und anschließend in eine rotatorische Bewegung der Abtriebsseite (2b) wandelbar ist.

5. Spannvorrichtung (2) nach Anspruch 4, **dadurch gekennzeichnet, dass** die Spannvorrichtung (2) eine Kulisse (10) zum Spannen der Kette (8) hat.

6. Spannvorrichtung (2) nach einem der vorhergehenden Ansprüche, **dadurch gekennzeichnet, dass** die Antriebsseite (2a) und die Abtriebsseite (2b) auf einer gemeinsamen Ebene liegen.

7. Spannvorrichtung (2) nach einem der vorhergehenden Ansprüche, **dadurch gekennzeichnet, dass** der Bolzen (5) mit einer Gleitlagerung in der Spannvorrichtung (2) gelagert ist.

8. Spannsystem (1) mit einem Werkzeugmaschinentisch (3) mit einer Anlagefläche (3a) zur Anlage eines zu bearbeitenden Werkstückes und mit wenigstens einer Nut (4), wobei in der Nut (4) wenigstens eine Spannvorrichtung (2) nach einem der vorhergehenden Ansprüche eingebracht ist, wobei der Bolzen (5) mit Außengewinde aus der Anlagefläche (3a) des Werkzeugmaschinentisches (3) herausragt, wobei das Außengewinde in ein zu bearbeitendes Werkstück schraubbar ist.

9. Spannsystem (1) nach Anspruch 8, **dadurch gekennzeichnet, dass** die Nut (4) eine T-förmige Nut (4) ist.

10. Spannsystem (1) nach einem der Ansprüche 8 oder 9, **dadurch gekennzeichnet, dass** die Spannvorrichtung (2) auf der abgewandten Seite der Anlagefläche (3a) des Werkzeugmaschinentisches (3) angeordnet ist, wobei der Bolzen (5) durch die Nut (4) auf die der Anlagefläche (3a) zugewandten Seite des Werkzeugmaschinentisches (3) ragt.

11. Spannsystem (1) nach einem der Ansprüche 8 bis 10, **dadurch gekennzeichnet, dass** die Spannvorrichtung (2) durch Verschraubung mit dem Werkstück an dem Werkzeugmaschinentisch (3) fixiert ist.

12. Spannsystem (1) nach Anspruch 11, **dadurch gekennzeichnet, dass** die Spannvorrichtung (2) in der Nut (4) beweglich gelagert ist und durch Verschraubung mit dem Werkstück an dem Werkzeugmaschinentisch (3) fixierbar ist.
